# EUROPÄISCHE PATENTSCHRIFT

(11) **EP 0 551 477 B1**
(45) Veröffentlichungstag und Bekanntmachung des Hinweises auf die Patenterteilung: **13.03.1996**
(21) Anmeldenummer: 92916479.6
(22) Anmeldetag: 29.07.1992
(51) Int. Cl.: F16H 55/22, B21H 5/02

(54) **Welle mit einer angeformten Schnecke, insbesondere für eine Scheibenwaschanlage, mit mindestens einem angeformten Lagerabschnitt**
Shaft with shaped endless Screw, in particular for Windshield Wipers, with shaped Bearing Journal
Arbre à vis sans fin façonné, notamment pour système essuie-galce, à tourillon façonné

(30) Priorität: 01.08.1991 DE 4125491
(43) Veröffentlichungstag der Anmeldung: 21.07.1993
(73) Patentinhaber: ITT Automotive Europe GmbH, D-60488 Frankfurt am Main (DE)
(72) Erfinder: KLINAR, Robert, D-7120 Bietigheim-Bissingen (DE)
(86) Internationale Anmeldenummer: EP9201718
(87) Internationale Veröffentlichungsnummer: WO9303296

(56) Entgegenhaltungen:
- BE-A- 451 597
- DE-A- 3 149 106
- GB-A- 1 137 035
- PATENT ABSTRACTS OF JAPAN vol. 8, no. 253 (M-339)(1690) 20. November 1984 & JP-A-59 127 943 (JIDOSHA KIKI) 23. Juli 1984
- Bosch Kraftfahrtechnisches Taschenbuch, VDI-Verlag Düsseldorf (DE), 19. Auflage 1984, Seite 592

## Beschreibung

Die Erfindung bezieht sich auf eine Welle mit einer angeformten Schnecke, insbesondere für ein Schneckengetriebe einer Scheibenwischanlage, mit mindestens einem angeformten Lagerabschnitt.

Eine derartige, gemäß dem Oberbegriff des Anspruchs 1 ausgebildete Welle ist aus Bosch, Kraftfahrtechnisches Taschenbuch, VDI-Verlag Düsseldorf (DE), 19. Auflage 1984, Seite 592, bekannt.

Wenn die Schnecke unmittelbar von einem Elektromotor angetrieben wird und dessen Welle zweifach gelagert ist, wobei sich eines der Lager zwischen der Schnecke und dem Kommutator befindet, so läßt sich das Lager auf den betreffenden Lagerabschnitt zwischen der Schnecke und dem Kommutator nur dann aufschieben, wenn der Durchmesser dieses Lagerabschnitts den Außendurchmesser der Schnecke übertrifft, so daß der Innendurchmesser des Lagers entsprechend groß sein kann.
Wenn die Schnecke durch Rollen gebildet werden soll, was zu einer Vergrößerung des Außendurchmessers gegenüber dem urspr. Durchmesser des Ausgangsmaterials führt, so läßt sich in herkömmlicher Weise ein größerer Lagerabschnitt nur verwirklichen, wenn man ein Ausgangsmaterial verwendet, dessen Durchmesser größer ist als derjenige der fertigen Schnecke. Im Bereich der zu rollenden Schnecke muß der Außendurchmesser zuvor auf das notwendige Maß abgedreht werden.

Es liegt die Aufgabe vor, eine Welle mit einer angeformten Schnecke mit mindestens einem angeformten Lagerabschnitt zu schaffen, welcher die verwendung eines im Durchmesser kleineren Ausgangsmaterials gestattet und trotzdem das Überschieben des Lagers über die fertige Schnecke ermöglicht.

Zur Lösung dieser Aufgabe wird erfindungsgemäß vorgeschlagen, daß die Welle mit einer angeformten Schnecke, insbesondere für ein Schneckengetriebe einer Scheibenwischanlage, mit mindestens einem angeformten Lagerabschnitt dadurch gekennzeichnet ist, daß sowohl die Schnecke als auch der Lagerabschnitt durch Rollen angeformt sind, wobei der Außendurchmesser des Lagerabschnitts denjenigen der Schnecke zumindest geringfügig übertriff.

Beim Rollen des Lagerabschnitts muß also darauf geachtet werden, daß das Material so stark verdrängt wird, daß im Endeffekt ein den Durchmesser der Schnecke übertreffender Außendurchmesser im Bereich des Lagerabschnitts entsteht. Beim Rollen weicht bekanntermaßen das Material durch das Eindrücken des Rollwerkzeugs in radialer Richtung aus. Dies bedeutet, daß in Abhängigkeit von der Form des Rollwerkzeugs aber auch von dessen Zustelltiefe in gewissen Grenzen auf die radiale Ausdehnung Einfluß genommen werden kann. Dieser Erfindung kommt im wesentlichen dann Bedeutung zu, wenn sich der erwähnte Lagerabschnitt zwischen der Schnecke und einem noch größeren Wellendurchmesser befindet, was bspw. dann gegeben ist, wenn sich der Lagerabschnitt zwischen der Schnecke und einem drehfest mit dieser verbundenen Kommutator befindet, dessen Durchmesser in aller Regel größer ist als der Lagerdurchmesser.

Nachdem man nunmehr durch das Rollen den Durchmesser im Lagerbereich vergrößern kann, reicht ein im Durchmesser kleineres Ausgangsmaterial aus, so daß man im Endeffekt Material und ggf. auch Zerspanungsarbeit einsparen kann.

Eine Weiterbildung der Erfindung sieht vor, daß die Schnecke und der Lagerabschnitt an einem die Welle bildenden Rundstab mit in diesen Bereichen gleichem Ausgangsdurchmesser angebracht sind. Das Ausgangsmaterial hat also über den Bereich von Lagerabschnitt und Schnecke einen konstanten Außendurchmesser. Den größeren Lagerabschnittdurchmesser erhält man demgemäß durch stärkeres Rollen des Materials im Bereich des Lagerabschnitts bezogen auf die Schnecke.

Desweiteren ist es sehr vorteilhaft, daß der Außendurchmesser, zumindest des Lagerabschnitts, maßgerecht geschliffen ist, so dass man einen ebenfalls maßhaltigen Innenring eines Wälzlagers in bekannter Weise aufschieben kann. Um diesen beim Aufschieben axial anschlagen zu können, wird in weiterer Ausgestaltung der erfindung vorgeschlagen, daß sich am schneckenabgewandten Ende des Lagerabschnitts ein Sicherungsring, bspw. ein Sprengring befindet, der in eine entsprechende Nut eingesprengt ist.

Es ist insbesondere vorgesehen, daß der Lagerabschnitt im wesentlichen durch zwei Außenbunde gebildet ist, deren Seitenabstand durch die Breite des Innenrings des zugeordneten Wälzlagers bestimmt ist.

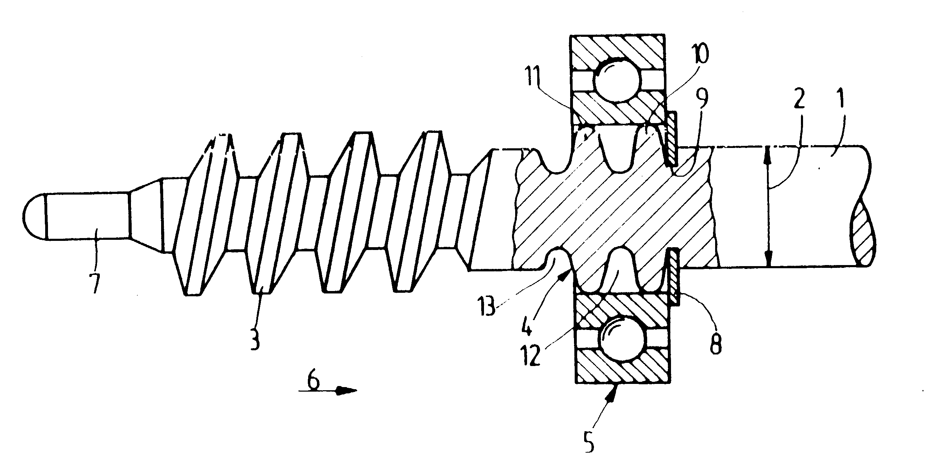

Die Erfindung wird nachstehend anhand der Zeichnung näher erläutert. Die Zeichnung zeigt ein Ausführungsbeispiel der Erfindung, teilweise in Seitenansicht und zum anderen Teil radial geschnitten.

An eine Welle 1 mit hinsichtlich des Ausgangsmaterials im hier relevanten Bereich konstantem Durchmesser 2 sind eine Schnecke 3 und ein Lagerabschnitt 4 durch Rollen angeformt. Aufgrund dieses Herstellungsverfahrens vergrößert sich in bekannter Weise der Außendurchmesser in den genannten Bereichen. Erfindungsgemäß wird nun derart gerollt, daß der Außendurchmesser des Lagerabschnitts 4 geringfügig größer ist als derjenige der Schnecke 3, so daß ein Lager 5, bspw. ein Wälzlager im Sinne des Pfeils 6 über die Schnecke hinweg auf den Lagerabschnitt aufgeschoben werden kann. Rechts vomgezeichneten Bereich kann die Welle 1 durchaus einen größeren Durchmesser erhalten, genausogut wie der Durchmesser links der Schnecke 3 zur Bildung eines Lager-Endzapfens 7 im Durchmesser reduziert sein kann.

In bevorzugter Weise handelt es sich bei der Welle 1 um eine Ankerwelle eines Elektromotors mit einstückig angeformter Schnecke 3 und mit einem nicht näher dargestellten Kommutator jenseits (von der Schnecke aus gesehen) des Lagers 5. Infolgedessen muß das Lager 7 in Pfeilrichtung 6 montiert werden. Um die Aufschie bebewegung des Lagers zu begrenzen, befindet sich rechts des Lagerabschnitts 4, also am schneckenabgewandten Ende des Lagerabschnitts, ein Sicherungsring 8 bekannter Art, insbesondere ein Sprengring, der in eine entsprechende Nut 9 der Welle 1 eingesetzt ist.

Beim Ausführungsbeispiel besteht der Lagerabschnitt im wesentlichen aus zwei Außenbunden 10 und 11. Sie entstehen durch Eindrücken des Rollwerkzeugs an den Stellen 12 und 13 des Ausgangsmaterials. Es kann sich um dasselbe Rollwerkzeug handeln, welches man zur Herstellung der Schnecke 3 verwendet jedoch mit dem Unterschied, daß es tiefer in das Material eingedrückt wird, so daß der größere Außendurchmesser entsteht. Wie aus der Kontur der Schnecke einerseits und des Lagerabschnitts 4 andererseits zu ersehen ist, kann man für die Herstellung dieser beiden Elemente auch separate Rollwerkzeuge verwenden, um die entsprechende Querschnittsform, insbesondere der Schnecke 3, zu erhalten.

Wenn die Bunde 10 und 11 während des Rollens der Schnecke 3 hergestellt werden, währenddessen die Welle 1 axial verschoben wird, werden auch diese Bunde Gewindeform haben, wobei dann ihre gesamte axiale Ausdehnung etwas größer als die des Lagers 5 gemacht werden kann. Eine Gewindeform würde nur dann vermieden, wenn man das Rollwerkzeug für den Lagerabschnitt mit der Welle 1 axial mitbewegt oder den Lagerabschnitt erst nach der Formung der Schnecke bei in axialer Richtung ruhender Welle 1 herstellt.

Ob ein Nachbearbeiten der Schnecke, insbesondere ein Überschleifen ihres Außendurchmessers erforderlich ist, hängt vom Einzelfall ab. Weil jedoch auf den Lagerabschnitt ein eng toleriertes Maschinenelement, nämlich das Lager 5 aufgeschoben wird, ist es auf jeden Fall zweckmäßig wenn nicht gar notwendig, daß man den Außendurchmesser des gerollten Lagerabschnitts überarbeitet, insbesondere überschleift, um zylindrische Anlageflächen der Außenbunde 10, 11 zu bekommen. Es leuchtet ohne weiteres ein, daß man selbstverständlich auch mehr als zwei Außenbunde vorsehen kann.

## Patentansprüche

1. Welle (1) mit einer angeformten Schnecke (3), insbesondere für ein Schneckengetriebe einer Scheibenwischanlage, mit mindestens einem angeformten Lagerabschnitt (4), **dadurch gekennzeichnet**, daß sowohl die Schnecke (3) als auch der Lagerabschnitt (4) durch Rollen angeformt sind, wobei der Außendurchmesser des Lagerabschnitts (4) denjenigen der Schnecke (3) zumindest geringfügig übertrifft.

2. Welle (1) mit einer angeformten Schnecke (3) nach Anspruch 1, dadurch gekennzeichnet, daß die Schnecke (3) und der Lagerabschnitt (4) an einem Rundstab mit in diesen Bereichen gleichem Ausgangsdurchmesser (2) angebracht sind.

3. Welle (1) mit einer angeformten Schnecke (3) nach Anspruch 1 oder 2, dadurch gekennzeichnet, daß der Außendurchmesser zumindest des Lagerabschnitts (4) maßgerecht geschliffen ist.

4. Welle (1) mit einer angeformten Schnecke (3) nach wenigstens einem der vorhergehenden Ansprüche, dadurch gekennzeichnet, daß sich am schneckenabgewandten Ende des Lagerabschnitts (4) ein Sicherungsring (8) befindet.

5. Welle (1) mit einer angeformten Schnecke (3), nach wenigstens einem der vorhergehenden Ansprüche, dadurch gekennzeichnet, daß der Lagerabschnitt (4) im wesentlichen durch zwei Außenbunde (10,11) gebildet ist.

## Claims

1. A shaft (1) with a worm (3) formed on it, in particular for a worm gear of a windshield wiping system wherein onto which at least one bearing section (4) is formed,
**characterized** in that the worm (3) as well as the bearing section (4) are formed by rolling, and the outside diameter of the bearing section (4) at least slightly exceeds the outside diameter of the worm (3).

2. A shaft (1) with a worm (3) formed on it, as claimed in claim 1,
**characterized** in that the shaft (1) with the worm (3) formed on it and the bearing section (4) are fixed at a round rod having an identical outside diameter (2) in these areas.

3. A shaft (1) with a worm (3) formed on it, as claimed in claim 1 or claim 2,
**characterized** in that the outside diameter at least of the bearing section (4) is ground true to size.

4. A shaft (1) with a worm (3) formed on it, as claimed in any one of the preceding claims,
**characterized** in that a retaining ring (8) is situated at the end of the bearing section (4) remote from the worm.

5. A shaft (1) with a worm (3) formed on it, as claimed in any one of the preceding claims,
**characterized** in that the bearing section (4) is essentially formed by two outside shoulders (10, 11).

## Revendications

1. Arbre (1), comportant une vis sans fin (3), notamment pour engrenage à vis sans fin pour essuie-glace, qui est venue de formage, et au moins une section de palier (4) venue de formage, caractérisé en ce que la vis sans fin (3) et la section de palier (4) sont l'une et l'autre réalisées par un formage par roulage, le diamètre extérieur de la section de palier (4) étant au moins légèrement supérieur à celui de la vis sans fin (3).

2. Arbre (1) comportant une vis sans fin (3) venue de formage selon la revendication 1, caractérisé en ce que la vis sans fin (3) et la section de palier (4) sont formées sur une barre à section circulaire ayant un diamètre initial (2) identique dans ces zones.

3. Arbre (1) comportant une vis sans fin (3) venue de formage selon la revendication 1 ou 2, caractérisé en ce que le diamètre extérieur au moins de la section de palier (4) est usiné à la dimension exacte.

4. Arbre (1) comportant une vis sans fin (3) venue de formage selon au moins l'une des revendications précédentes, caractérisé en ce qu'une bague de blocage (8) est disposée à l'extrémité de la section de palier (4) qui est située à l'opposé de la vis sans fin.

5. Arbre (1) comportant une vis sans fin (3) venue de formage selon au moins l'une des revendications précédentes, caractérisé en ce que la section de palier (4) est essentiellement formée de deux collerettes extérieures (10, 11).
